Europäisches Patentamt

European Patent Office

Office européen des brevets

(19)

(11) Veröffentlichungsnummer: **0 301 425 B1**

(12) # EUROPÄISCHE PATENTSCHRIFT

(45) Veröffentlichungstag der Patentschrift: **19.02.92**

(51) Int. Cl.5: **B21D 39/20**

(21) Anmeldenummer: **88111821.0**

(22) Anmeldetag: **22.07.88**

(54) **Aufweitsonde mit aufspreizbaren Dichtungen.**

(30) Priorität: **28.07.87 DE 3724904**

(43) Veröffentlichungstag der Anmeldung:
**01.02.89 Patentblatt 89/05**

(45) Bekanntmachung des Hinweises auf die
Patenterteilung:
**19.02.92 Patentblatt 92/08**

(84) Benannte Vertragsstaaten:
**BE CH DE ES FR GB IT LI NL SE**

(56) Entgegenhaltungen:
**EP-A- 0 055 101**
**DE-A- 3 312 073**
**DE-C- 3 408 863**
**GB-A- 2 074 914**

(73) Patentinhaber: **Emitec Gesellschaft für Emissionstechnologie mbH**
**Hauptstrasse 150**
**W-5204 Lohmar 1(DE)**

(72) Erfinder: **Weiss, Karl, Dr.**
**Kastanienweg 24**
**W-5205 St. Augustin(DE)**
Erfinder: **Swars, Helmut**
**Riedweg 119**
**W-5060 Bergisch Gladbach 1(DE)**

(74) Vertreter: **Neumann, Ernst Dieter, Dipl.-Ing. et al**
**HARWARDT NEUMANN PATENTANWÄLTE**
**Scheerengasse 2 Postfach 1455**
**W-5200 Siegburg(DE)**

## Beschreibung

Die Erfindung betrifft eine mit Druckfluid beaufschlagbare Sonde für das abschnittsweise Aufweiten eines Rohres zum gleichzeitigen Festlegen von mehreren äußeren Konstruktionselementen, wie Nocken, Lagern oder Zahnrädern, mit einem zylindrischen Grundkörper und darauf aufgeschobenen Dichtungselementen, wobei eine Mehrzahl von aufzuweitenden Abschnitten des Rohres durch die Dichtungselemente von unverformt bleibenden Abschnitten des Rohres abgrenzbar sind.

Eine Sonde der vorstehend genannten Art ist der EP-A-0 213 529 zu entnehmen, mit der ein Verfahren zum gleichzeitigen Befestigen mehrerer Antriebselemente, insbesondere Nocken auf einem Rohrkörper durch gleichzeitiges abschnittsweise vollzogenes Aufweiten desselben beschrieben ist. Die Problematik geeigneter Dichtungselemente ist dabei nicht näher ausgeführt. Als Dichtungen sind einfache O-Ringe aus elastischen Werkstoffen aufgezeigt, die paarweise zur Bildung von Aufweitabschnitten in Nuten an der Oberfläche des Sondengrundkörpers eingelegt sind. Die Praxis hat gezeigt, daß mit derartigen Dichtungen Sonden für eine Serienfertigung nicht darzustellen sind, da die Dichtungselemente bei Druckbeaufschlagung in den Ringspalt zwischen Rohrkörper und Sondengrundkörper gequetscht werden und nur wenige Aufweitvorgänge unbeschädigt überstehen.

Aus dem Bereich des hydraulischen Aufweiten von Rohren zum Festlegen in Rohrböden sind verschiedene Sonden bekannt, bei denen O-Ringe aus gummielastischem Material vor der Druckbeaufschlagung radial aufgeweitet werden, um die O-Ringe zur dichtenden Anlage gegenüber der Wandung des Rohres zu bringen, bevor der entstehende Ringraum mit Druckfluid beaufschlagt wird. Nach der DE 33 12 073 C2 ist beispielsweise eine Sonde bekannt, bei der jeweils O-Ringe paarweise angeordnet sind und voneinander durch eine auf den Sondenkörper geschobene Distanzhülse auf Abstand gehalten werden, wobei die O-Ringe auf einander annäherbare Spannkonen auflaufen können. Jeweils auf die Spreizkonen aufgesetzte Keilringe, die ebenfalls radial aufweitbar sind, dienen als zusätzliche Stützringe. Durch die erforderliche Länge der Spannkonen ist eine derartige Spreizvorrichtung für eine Anwendung bei Sonden für das Festlegen von mehreren äußeren Konstruktionselementen wenig geeignet, die mangelnde Eignung der O-Ringe als Dichtelemente auch bei größerer Shorehärte ist ebenfalls zu bemängeln. Aufgrund der freien axialen Beweglichkeit der O-Ringe auf den Spreizkonen ist eine exakte Lagebestimmung der Dichtungen beim endgültigen dichten Anliegen nicht verherbestimmbar. In der DE 34 08 863 C1 sind daher bei einer gleichartigen Sonde beide gegeneinander gerichtete Spannkonen ortsfest am Sondengrundkörper angeordnet, ein zusätzlicher am Sondengrundkörper angeordneter entgegengerichteter Vorspannkonus vorgesehen und die Abstandshülse, die Dichtungen und die Stützringe gemeinsam in einer Richtung gegenüber dem Sondengrundkörper verschiebbar. Hierbei ist die aufwendige Form des Sondengrundkörpers von Nachteil, eine Mehrfachanordnung dieser Konstruktion auf einer Sonde ist nicht möglich. Die verwendeten O-Ringe sind für den eingangs genannten Anwendungsfall wiederum ungeeignet. Aus der EP 00 55 101 B1 ist schließlich eine Sonde bekannt, die ähnlich wie die zuvor genannten mit O-Ringen arbeitet, die auf Spreizkonen auflaufen sollen. Dies geschieht ausschließlich unter der Wirkung des aufgebrachten Innendrucks. Auch hierbei ist die Unbestimmtheit der axialen Lage der Dichtung bei Erreichen der Dichtwirkung gegenüber dem Rohrkörper nachteilig. Die dargestellten gummielastischen O-Ringe sind aus den obengenannten Gründen ungeeignet.

Der vorliegenden Erfindung liegt die Aufgabe zugrunde, eine Sonde zum gleichzeitigen hydraulischen Aufweiten mehrerer einzelner Längsabschnitte zum Festlegen von Konstruktionselementen der eingangs genannten Art bereitzustellen, mit denen eine gleichzeitige lagegenaue Aufweitung der einzelnen Rohrabschnitten in exakter Zuordnung zu den aufgeschobenen Konstruktionselementen möglich ist und die bei einfachem konstruktiven Aufbau eine gegenüber bekannten Sonden zum Aufweiten mehrerer Längsabschnitte verbesserte Abdichtung bei guter Standfestigkeit der Dichtungen und leichter Einführbarkeit der Sonde in das Rohr ermöglicht. Die Lösung hierbei besteht in einer Sonde, die sich durch abwechselnd mit den Dichtungselementen auf den Sondengrundkörper aufgeschobenen Distanzhülsen, eine Einrichtung zum axialen Annähern der Distanzhülsen aneinander unter gleichzeitigem Zusammendrücken und radialen Aufweitungen der Dichtungselementen zum Andrücken an die Innenseite des Rohres und durch Mittel zum Begrenzen des axialen Verschiebeweges zumindest eines Teils der Distanzhülsen relativ zum Sondengrundkörper auszeichnet. Mit einer derartig aufgebauten Sonde wird sichergestellt, daß die paarweise angeordneten Dichtungselemente in vorbestimmter Lage mit geringer axialer Toleranz zur dichtenden Anlage mit dem Rohr gebracht werden und daß die auf die Dichtungselemente ausgeübten Kräfte zum Aufspreizen sich in bestimmten engen Grenzen bewegen, da die Verschiebewege der Distanzhülsen, die dieses bewirken, begrenzt sind.

Nach einer ersten bevorzugten Ausgestaltung ist jeweils eine zwischen den aufzuweitenden Bereichen liegende Distanzhülse mit Mitteln zur Begrenzung des axialen Verschiebeweges versehen, die aus radial eingesetzten Stiften bestehen können, die in Axialnuten von begrenzter Länge im Sondengrundkörper eingreifen können. Die leichte Montagemöglichkeit der modulartig aufgebauten Sonde ist hierbei im wesentlichen nicht beeinträchtigt, da die Anschlagstifte beispielsweise einschraubbar ausgeführt sein können. Nach einer günstigen Weiterbildung können die genannten Stifte durchbohrt sein und so dem Zuführen von Druckfluid in die durch die Dichtungselemente abgegrenzten aufzuweitenden Abschnitte bzw. zum Abführen von Leckfluid aus den jeweils dazwischenliegenden unverformt bleibenden Abschnitten dienen.

Nach einer günstigen Weiterbildung weisen die Dichtungen einen axial geschichteten Aufbau auf, wobei jeweils der nach außen liegende Teil vom druckbeaufschlagten Ringraum aus gesehen eine größere Härte aufweist, um das bekannte Wegfließen des Materials in den Ringspalt zu verhindern und umfaßt dabei den innenliegenden flexibleren Teil im Querschnitt etwa U-förmig.

Nach einer zweiten bevorzugten Ausgestaltung umfassen die Mittel zum Begrenzen des axialen Verschiebeweges innerhalb der Dichtungselemente liegende Druckfederelemente, die auf Anschlag zu bringen sind und so den Verschiebeweg der Distanzhülsen zueinander und damit insgesamt gegenüber dem Grundkörper begrenzen. Nach einer günstigen Ausführung sind diese Elemente als konische Ringscheiben ausgeführt, die durch das axiale Zusammendrücken zugleich radial vergrößert werden und selbst als Dichtungselemente wirken.

Bevorzugt wird ein Paket aus mehreren derartigen Scheiben verwendet, die innen ein härteres, die Rückstellkräfte erzeugendes Material und außen eine weichere Dichtauflage aufweisen. Die konischen Ringe werden so angeordnet, daß sie im entlasteten Zustand von der druckfluidbelasteten Ringkammer aus gesehen nach außen liegende gedachte Konusspitzen aufweisen.

Die Einrichtung zum axialen Annähern der Distanzhülsen weist bevorzugt einen axial auf den Grundkörper verschiebbaren Anschlag auf, der mit einem gegenüber dem Grundkörper axial festen Anschlag zusammenwirkt, wobei beide die Dichtungselemente und Distanzhülse axial einfassen. Besonders vorteilhaft ist es, daß die Distanzhülsen der Sonde als gerade Rohrstücke mit achsnormalen Stirnflächen ausgestaltet sein können. Während der axial verschiebliche Anschlag unmittelbar auf eine äußere Distanzhülse einwirken kann, ist es möglich, den axial festen Anschlag auf ein auf das Rohrende aufgeschobenes besonders ausgestaltetes Konstruktionselement einwirken zu lassen, zum Beispiel ein Antriebsritzel mit hülsenförmigen Ansatz.

Bevorzugte Ausführungen der Erfindung sind in den Zeichnungen dargestellt.

Hierin zeigt

Fig. 1 eine erfindungsgemäße Sonde im Längsschnitt,

Fig. 2 eine Sondenabschnitt nach Fig. 1 in einer ersten Ausführung in vergrößerter Darstellung,

Fig. 3 Einzelheiten nach Fig. 2 in vergrößerter Darstellung,

Fig. 4 einen Sondenabschnitt nach Fig. 1 in einer zweiten Ausführung beim Aufweiten in vergrößerter Darstellung,

Fig. 5 Einzelheiten nach Fig. 4 in vergrößerter Darstellung.

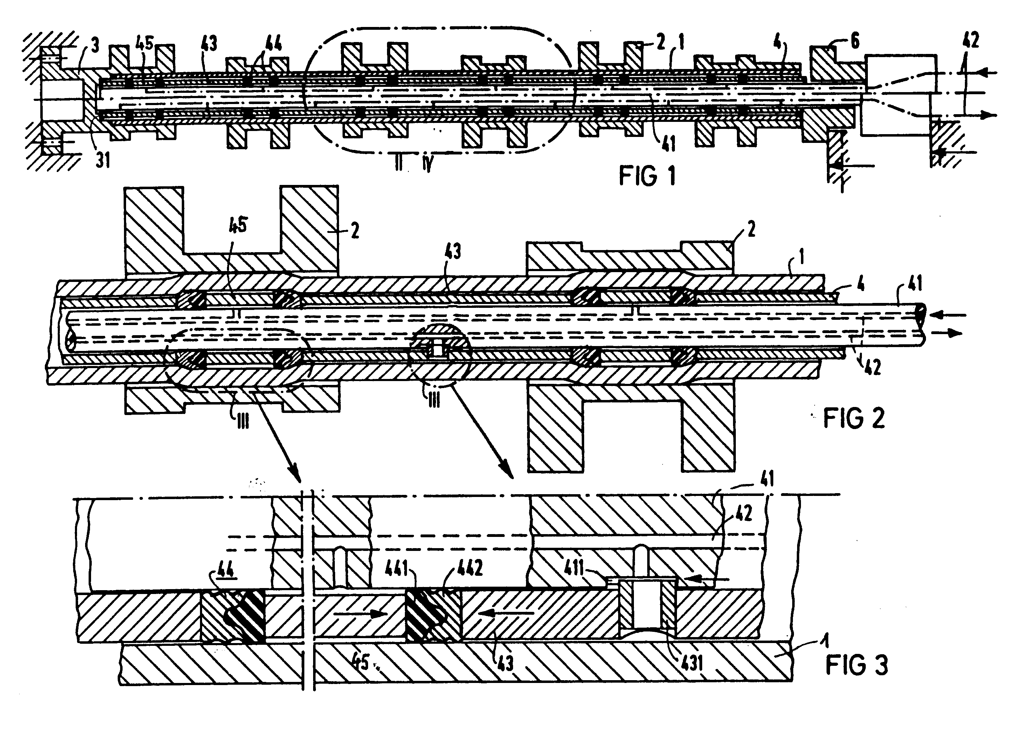

Fig. 1 zeigt eine Sonde mit einer aufgeschobenen Nockenwelle für einen Sechszylindermotor, die aus einem Rohr 1 und darauf zu befestigenden Doppelnocken 2 und einem mit einem Doppelnocken kombinierten Antriebsritzel 3 besteht, der hülsenartig auf das Rohrende aufgeschoben ist.

Die Sonde besteht, wie auch in Fig. 2 erkennbar ist, aus einem Grundkörper 41 mit axial verlaufenden Kanälen 42 für das Zuführen von Druckfluid und das Abführen von Leckfluid sowie darauf aufgeschobenen Distanzhülsen 43 und Dichtungsanordnungen 44. Entsprechend den durch die Lage der Nocken 2 vorgegebenen Positionen der Aufweitabschnitte sind Distanzhülsen 43, 45 wechselnder Länge aufgeschoben, zwischen denen die paarweise angeordneten Dichtungen 44 liegen. Die letzte der Distanzhülsen stützt sich axial an einer Schulter 31 des Ritzels 3 ab, das selber an einem festen Anschlag anliegt, weiter umfaßt die Vorrichtung einen axial gegenüber dem Sondengrundkörper verschiebbaren Anschlag 6, der in zwei Positionen dargestellt ist. Das Verschieben des Anschlages 6 bewirkt ein gegenseitiges Annähern der Kette von Distanzhülsen 43, 45 und damit ein Zusammendrücken und Aufweiten der Dichtungselemente, wie in den nachstehenden Figuren noch erkennbar wird.

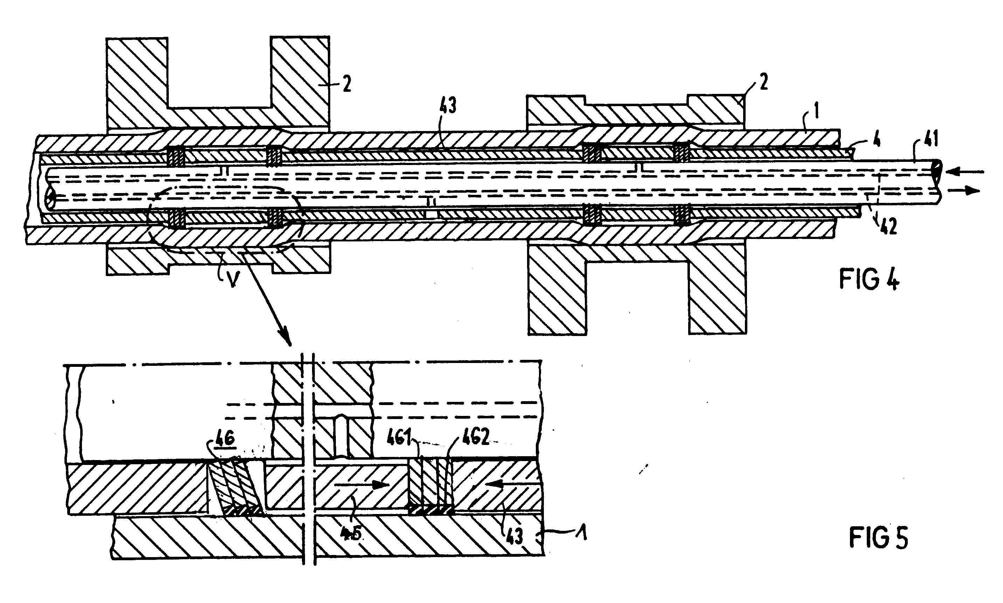

In der Einzelheit nach Fig. 3 ist zu erkennen, daß die Dichtungen 44 jeweils aus einem ersten Ring 441 aus härterem widerstandsfähigem Werkstoff und einem zweiten, zum druckbeaufschlagten Ringraum hin liegenden Ring 441 aus einem gummielastischen Werkstoff. Während das links dargestellte Dichtungselement den Zustand vor dem Vorspannen der Dichtungselemente bei größerer axialer Länge zeigt, ist das rechts dargestellte Dichtungselement verkürzt, wodurch sich eine radiales Aufweiten und eine feste Anlage an der Wandung des Rohres 4 ergibt. An der Distanzhülse 43 ist erkennbar, daß ein hülsenförmiger Stift 431 in eine Bohrung eingesetzt ist, die in eine Axialnut 411 im Sondengrundkörper 41 eingreift und so den axialen Verschiebeweg begrenzt. Die Innenbohrung des Stiftes 431 hat Verbindung mit einem Entlastungskanal 42 für Leckfluid.

In Fig. 4 ist bei im übrigen gleicher Darstellung wie in Fig. 2 eine Sonde mit Dichtungselementen 46 dargestellt, die jeweils aus einzelnen Ringscheiben bestehen, die in der dargestellten Position die Annäherung der Distanzhülsen 43, 45 aneinander begrenzen.

Wie in der Einzelheit nach Fig. 5 zu erkennen ist, bestehen die Dichtungselemente 46, wie links dargestellt ist, aus einzelnen konischen Ringscheiben 461 und äußeren Dichtungsauflagen 462, wobei die innenliegenden Ringe größerer radialer Durchmesser Rückstellkräfte bei Verformung aufbringen und durch ihre höhere Festigkeit die axiale Annäherung der Distanzhülsen exakt begrenzen. In der rechts dargestellten zusammengedrückten Lage ist dies erkennbar, die ursprünglich konischen Ringscheiben 461 nehmen hier im wesentlichen ebene Form an, während die äußeren Auflagen 462 dichtend am Rohrkörper 1 anliegen.

**Patentansprüche**

1. Druckfluid-beaufschlagbare Sonde für das abschnittsweise Aufweiten eines Rohres zum gleichzeitigen Festlegen von mehreren äußeren Konstruktionselementen, wie Nocken, Lagern oder Zahnrädern, mit einem zylindrischen Grundkörper und darauf aufgeschobenen Dichtungselementen, wobei eine Mehrzahl von aufzuweitenden Abschnitten des Rohres durch die Dichtungselemente von unverformt bleibenden Abschnitten des Rohres abgrenzbar sind,

   gekennzeichnet

   durch abwechselnd mit den Dichtungselementen (44, 46) auf den Grundkörper (41) aufgeschobenen Distanzhülsen (43, 45),

   durch eine Einrichtung (3, 6) zum axialen Annähern der Distanzhülsen (43, 45) aneinander unter gleichzeitigem Zusammendrücken und radialen Aufweiten der Dichtungselemente (44, 46) zum Andrücken an die Innenseite des Rohres (4) und

   durch Mittel zum Begrenzen des axialen Verschiebeweges zumindest eines Teils der Distanzhülsen (43) relativ zum Grundkörper (41).

2. Sonde nach Anspruche 1,

   dadurch gekennzeichnet,

   daß die Mittel zum Begrenzen des Verschiebeweges radial in die Distanzhülsen (43) eingesetzte Stifte (431) umfassen, die in axiale Nuten (411) begrenzter Länge im Grundkörper (41) eingreifen.

3. Sonde nach Anspruch 2,

   dadurch gekennzeichnet,

   daß die Stifte (431) in den Distanzhülsen (43) zum Zuführen von Druckfluid in die durch die Dichtungselemente abgegrenzten aufzuweitenden Abschnitte und/oder zum Abführen von Leckfluid aus den jeweils dazwischenliegenden unverformt bleibenden Abschnitten längs durchbohrt sind.

4. Sonde nach einem der Ansprüche 2 oder 3,

   dadurch gekennzeichnet,

   daß die elastischen Dichtungselemente (44) jeweils aus einem nach innen zum druckfluidbeaufschlagten abzudichtenden Abschnitt hin liegenden weicheren Spreizteil (441) und einem nach außen zu den unbeaufschlagten Abschnitten hin liegenden härteren Stützteil (442) bestehen.

5. Sonde nach Anspruch 4,

   dadurch gekennzeichnet,

   daß das härtere Stützteil (442) das weichere Spreizteil (441) im Querschnitt U-förmig umfaßt.

6. Sonde nach Anspruch 1,

   dadurch gekennzeichnet,

   daß die Mittel zum Begrenzen des Verschiebeweges innerhalb der Dichtungselemente liegende auf Anschlag bringbare Druckfederelemente umfassen.

7. Sonde nach Anspruche 6,

   dadurch gekennzeichnet,

   daß die elastischen Dichtungselemente und die Druckfederelemente gemeinsam aus vorzugsweise geschichtet aufgebauten konischen Spreizringen (46) bestehen.

8. Sonde nach Anspruche 7,

   dadurch gekennzeichnet,

daß die konischen Spreizringe (46) aus einem härteren Federring (461) größeren radialen Durchmessers und einer außenliegenden weicheren Dichtauflage (462) bestehen.

9. Sonde nach einem der Anspruche 1 bis 8,

dadurch gekennzeichnet,

daß die Einrichtung zumindest einen axial auf dem Grundkörper (41) verschiebbaren Anschlag (6) aufweist, der mit einem gegenüber dem Grundkörper (41) axial festen Anschlag zusammenwirkt.

10. Sonde nach einem der Ansprüche 1 bis 9,

dadurch gekennzeichnet,

daß die Distanzhülsen (43, 45) gerade Rohrstücke mit achsnormalen Stirnflächen sind.

11. Sonde nach Ansprüche 1 bis 10,

dadurch gekennzeichnet,

daß zumindest der verschiebbare Anschlag (6) unmittelbar auf eine äußere Distanzhülse (43) einwirkt.

12. Sonde nach einem der Ansprüche 1 bis 11,

dadurch gekennzeichnet,

daß der feststehende Anschlag auf ein über das Rohrende (4) geschobenes Konstruktionselement (3) einwirkt.

**Claims**

1. A mandrel, loaded by a pressurised fluid, for expanding a tube in portions and simultaneously securing external elements such as cams, bearings or gears, having a cylindrical body member and sealing elements slid onto the tube, with a plurality of tube portions to be expanded being delineated by sealing elements relative to those portions remaining undeformed,
characterised
by spacing sleeves (43, 45) slid on to the body member (41) so as to alternate with the sealing elements (44, 46);
by a device (3, 6) for axially moving the spacing sleeves (43, 45) towards each other while simultaneously compressing and radially expanding the sealing elements (44, 46) for pressing them against the inner face of the tube (4); and by means for limiting the axial sliding movement of at least part of the spacing sleeves (43) relative to the body member (41).

2. A mandrel according to claim 1,
characterised in
that the means for limiting the sliding movement comprise pins (431) which are radially inserted into the spacing sleeves (43) and which engage axial grooves (411) of limited length in the body member (41).

3. A mandrel according to claim 2,
characterised in
that for the purpose of supplying pressurised fluid into the portions to be expanded and delineated by the sealing elements and/or for draining leaked fluid from the intermediate portions remaining undeformed, the pins (431) in the spacing sleeves (43 are provided with longitudinal through bores.

4. A mandrel according to either one of claims 2 or 3,
characterised in
that the resilient sealing elements (44) each consist of a softer expanding part (441) positioned inwardly towards the portion to be sealed and loaded by pressurised fluid and a harder supporting part (442) positioned outwardly towards the unloaded portions.

5. A mandrel according to claim 4,
characterised in
that the harder supporting part (442) embraces the softer expanding part (441) and has a U-shaped cross section.

6. A mandrel according to claim 1,
characterised in
that the means for limiting the sliding movement comprise pressure spring elements positioned within the sealing elements and suitable for being made to establish contact.

7. A mandrel according to claim 6,
characterised in
that the resilient sealing elements and the pressure spring elements jointly consist of preferably conical expanding rings (46) of a layered structure.

8. A mandrel according to claim 7,
characterised in
that the conical expanding rings (46) each consist of a harder spring ring (461) with a greater radial diameter and an external softer seating coating (462).

9.  A mandrel according to any one of claims 1 to 8,
    characterised in
    that the device comprises at least one stop (6) which is axially movable on the body member (41) and which co-operates with a stop which is axially fixed relative to the body member (41).

10. A mandrel according to any one of claims 1 to 9,
    characterised in
    that the spacing sleeves (43, 45) are straight tubular pieces with end faces normal to their axes.

11. A mandrel according to any one of claims 1 to 10,
    characterised in
    that at least the movable stop (6) acts directly on an outer spacing sleeve (43).

12. A mandrel according to any one of claims 1 to 11,
    characterised in
    that the fixed stop acts on an element (3) slid over the tube end (4).

**Revendications**

1.  Sonde pouvant recevoir un fluide sous pression pour l'élargissement par segments d'un tube en vue de la fixation simultanée de plusieurs éléments de construction externes, tels que des cames, des paliers ou des roues dentées, avec un corps de base cylindrique et des éléments d'étanchéité enfilés sur celui-ci, une multiplicité de segments à élargir du tube pouvant être séparés des segments du tube qui restent non déformés par les éléments d'étanchéité, caractérisée par des manchons d'écartement (43, 45) enfilés en alternance avec les éléments d'étanchéité (44, 46) sur le corps de base (41), par un dispositif (3, 6) pour le rapprochement axial des manchons d'écartement (43, 45) les uns des autres avec compression simultanée et élargissement radial des éléments d'étanchéité (44, 46) en vue de l'appui sur le côté interne du tube (4) et par des moyens pour limiter le trajet de déplacement axial au moins d'une partie des manchons d'écartement (43) par rapport au corps de base (41).

2.  Sonde selon la revendication 1, caractérisée en ce que les moyens pour limiter le trajet de déplacement comprennent des broches (431) insérées radialement dans les manchons d'écartement (43) et qui pénètrent dans des rainures axiales (411) de longueur limitée du corps de base (41).

3.  Sonde selon la revendication 2, caractérisée en ce que les broches (431) des manchons d'écartement (43) sont percées longitudinalement de part en part pour amener du fluide sous pression dans les segments à élargir limités par les éléments d'étanchéité et/ou pour évacuer du fluide de fuite des segments qui demeurent non déformés situés entre les précédents.

4.  Sonde selon l'une des revendications 2 ou 3, caractérisée en ce que les éléments d'étanchéité élastiques (44) consistent chacun en une partie extensible (441) plus molle située vers l'intérieur par rapport au segment à étanchéifier sollicité par le fluide sous pression et en une partie de soutien (442) plus dure située vers l'extérieur par rapport aux segments non sollicités.

5.  Sonde selon la revendication 4, caractérisée en ce que la partie de soutien (442) plus dure entoure en forme de U en coupe transversale la partie extensible (441) plus molle.

6.  Sonde selon la revendication 1, caractérisée en ce que les moyens pour limiter le trajet de déplacement comportent des éléments à ressort de compression situés à l'intérieur des éléments d'étanchéité et qui peuvent être mis en butée.

7.  Sonde selon la revendication 6, caractérisée en ce que les éléments d'étanchéité élastiques et les éléments à ressort de compression consistent ensemble en anneaux extensibles (46) coniques, de préférence disposés en couches.

8.  Sonde selon la revendication 7, caractérisée en ce que les anneaux extensibles coniques (46) consistent en un anneau élastique (461) plus dur de plus grand diamètre radial et en un support étanche (462) plus mou situé à l'extérieur.

9.  Sonde selon l'une des revendications 1 à 8, caractérisée en ce que le dispositif présente au moins une butée (6), déplaçable axialement sur le corps de base (41), qui coopère avec une butée axialement fixe par rapport au corps de base (41).

10. Sonde selon l'une des revendications 1 à 9, caractérisée en ce que les manchons d'écartement (43, 45) sont des tronçons de tube rectilignes avec des surfaces frontales perpendiculaires à l'axe.

11. Sonde selon l'une des revendications 1 à 10, caractérisée en ce qu'au moins la butée déplaçable (6) agit immédiatement sur un manchon d'écartement externe (43).

12. Sonde selon l'une des revendications 1 à 11, caractérisée en ce que la butée fixe agit sur un élément de construction (3) enfilé sur l'extrémité du tube (4).

FIG 1

FIG 2

FIG 3

EP 0 301 425 B1

FIG 4

FIG 5